# EUROPÄISCHE PATENTSCHRIFT

(11) **EP 2 289 157 B1**
(45) Veröffentlichungstag und Bekanntmachung des Hinweises auf die Patenterteilung: **30.09.2015**
(21) Anmeldenummer: 09765675.5
(22) Anmeldetag: 28.04.2009
(51) Int. Cl.: H02M 3/158

(54) **GLEICHSTROM-DIREKTUMRICHTER**
DIRECT D.C. CONVERTER
CONVERTISSEUR DIRECT DE COURANT CONTINU

(30) Priorität: 19.06.2008 DE 102008002525
(43) Veröffentlichungstag der Anmeldung: 02.03.2011
(73) Patentinhaber: Robert Bosch GmbH, 70442 Stuttgart (DE)
(72) Erfinder: SCHOENKNECHT, Andreas, 70327 Stuttgart (DE)
(86) Internationale Anmeldenummer: PCT/EP2009/055105
(87) Internationale Veröffentlichungsnummer: WO 2009/153095

(56) Entgegenhaltungen:
- EP-A- 1 895 648

## Beschreibung

Die Erfindung betrifft einen Gleichspannungswandler mit einer Primärseite und einer mit der Primärseite galvanisch gekoppelten Sekundärseite.

### Stand der Technik

Zur Versorgung elektrischer Maschinen von Hybridantrieben werden Hochvolt-oder Traktionsbatterien eingesetzt, denen ein Wechselrichter nachgeschaltet ist. Eine nominale Spannung der Hochvoltbatterien liegt bei cirka 100 V - 300 V. Aufgrund des Batterieinnenwiderstands beträgt eine Spannung an einem Zwischenkreis des Wechselrichters je nach Betriebsart, motorisch oder generatorisch, der elektrischen Maschine und je nach übertragener elektrischer Leistung zwischen cirka 50 V und 400 V. Eine hohe Zwischenkreisspannung führt zu Kosten- und Bauraumeinsparungen bei dem Wechselrichter, bei im Kraftfahrzeug verwendeten Kabelbäumen und bei der elektrischen Maschine. Um diese zu erreichen, wird für eine Spannungserhöhung ein ein- oder mehrphasiger Hochsetzsteller eingesetzt. Der klassische Hochsetzsteller besitzt eine Drossel, die gemeinsam mit einem Kondensator, einer Diode und mittels eines Schalters eine zeitweise erhöhte Spannung erzeugt. Nachteilig bei dem Einsatz eines derartigen Hochsetzstellers in einem Hybridantrieb ist, dass ein sehr hoher Induktionswert der Drossel benötigt wird, welcher zu hohen Kosten und zu einem großen benötigten Bauraum führt. Ferner werden als Schalter Halbleiter eingesetzt, die beim Schalten Stromsprünge herbeiführen, was zu hohen elektrischen Verlusten und damit zu einer großen erforderlichen Halbleiterfläche führt, die ebenfalls entsprechenden Bauraum benötigt und hohe Kosten erzeugt. Zudem führen die Stromsprünge zu einer hohen elektromagnetischen Belastung der Umwelt

Aufgabe der Erfindung ist es daher, die Erhöhung einer Gleichspannung auf kostengünstige Weise und unter Einsparung von Bauraum herbeizuführen. Darüber hinaus ist aus der europäischen Offenlegungsschrift EP 1 895 648 A2 ein Gleichspannungswandler bekannt, der eine Primärseite und eine Sekundärseite aufweist, die durch eine Schalteinrichtung miteinander gekoppelt sind, wobei in einer ersten Subroutine ein erster Sekundärkondensator der Sekundärseite und anschließend in einer zweiten Subroutine ein zweiter Sekundärkondensator der Sekundärseite jeweils über eine Drossel der Primärseite aufgeladen wird, wobei der jeweilige Ladevorgang beendet wird, wenn der Ladestrom Null erreicht.

### Offenbarung der Erfindung

Die Aufgabe wird erfindungsgemäß durch einen Gleichspannungswandler mit den Merkmalen des Anspruchs 1 dadurch gelöst, dass die Primärseite mindestens eine Drossel und die Sekundärseite mindestens zwei in Reihe geschaltete Sekundärkondensatoren aufweist, wobei zwischen Primärseite und Sekundärseite eine steuerbare oder regelbare elektronische Schalteinrichtung angeordnet ist, die schaltabhängig in einer ersten Betriebsart die Sekundärkondensatoren nacheinander über die Drossel auflädt und den jeweiligen Ladevorgang etwa beim Nulldurchgang des jeweiligen Ladestroms beendet. In der ersten Betriebsart wird eine an der Primärseite anliegende Gleichspannung mittels des Gleichspannungswandlers erhöht und an der Sekundärseite ausgegeben. Dabei ist insbesondere vorgesehen, dass die Primärseite einer Hochspannungsbatterie zugeordnet ist und die Sekundärseite einer elektrischen Maschine zugeordnet ist. Die elektrische Maschine ist vorzugsweise ein Antriebsaggregat eines Hybridantriebs. Dann ergibt sich für die erste Betriebsart ein motorischer Betrieb. Aufgrund der Beendigung des jeweiligen Ladevorgangs etwa beim Nulldurchgang des jeweiligen Ladestroms wird verhindert, dass die Schalteinrichtung beim Schalten Stromsprünge erzeugt. Dies führt wiederum dazu, dass nur geringe Verluste an der Schalteinrichtung entstehen. Zudem wird aufgrund des erfindungsgemäßen Vorgehens Stromsprünge beim Schalten zu verhindern, indem bei Nulldurchgängen geschaltet wird, die elektromagnetische Belastung der Umwelt erheblich reduziert. Für eine dauerhafte Gleichspannungserhöhung werden die Sekundärkondensatoren in zyklischer Weise beladen und entladen.

Nach einer vorteilhaften Weiterbildung der Erfindung ist vorgesehen, dass die Drossel und eine Schaltfrequenz der Schalteinrichtung derart bemessen sind, dass der jeweilige Ladestrom einen etwa sinusförmigen Halbwellenverlauf aufweist. Um dies zu erreichen, ist insbesondere ein resonantes Verhalten der Drossel innerhalb des Gleichspannungswandlers vorteilhaft. Aufgrund der Auslegung der Drossel auf Resonanz ist nur ein sehr geringer Induktivitätswert der Drossel erforderlich und die Drossel kann deshalb sehr klein ausgelegt werden. Die Schaltfrequenz gibt die Häufigkeit des Schaltens mindestens eines Schaltelements an. Weist der Ladestrom einen etwa sinusförmigen Halbwellenverlauf auf, dann ergibt sich, dass ein Nulldurchgang des Ladestroms beim jedem Schalten vorliegt.

Erfindungsgemäß ist vorgesehen, dass die Primärseite zwei Eingangsanschlüsse aufweist, an die ein Primärkondensator angeschlossen ist. Der Einsatz eines zusätzlichen Primärkondensators führt dazu, dass bei einer Gleichspannungswandlung zunächst der Primärkondensator aufgeladen wird. Anschließend werden über die Drossel und die Schalteinrichtung die Sekundärkondensatoren mittels der in dem Primärkondensator gespeicherten Spannung aufgeladen, wodurch sich die Gleichspannungswandlung sehr effektiv und zyklisch erzeugen lässt.

Nach einer Weiterbildung der Erfindung sind zwei Drosseln vorgesehen, wobei die eine Drossel an den einen Eingangsanschluss und an die Schalteinrichtung und die andere Drossel an den anderen Eingangsanschluss und an die Schalteinrichtung angeschlossen ist. Die zwei Drosseln ermöglichen eine Symmetrisierung einer Schaltungsstruktur des Gleichspannungswandlers. Ferner ist ihre gleichzeitige Wirkung als Filter für eine elektromagnetische Verträglichkeit vorteilhaft.

Nach einer vorteilhaften Weiterbildung der Erfindung ist vorgesehen, dass die Schalteinrichtung als Schaltelemente elektronische Leistungshalbleiter aufweist. Durch das Schalten bei den Nulldurchgängen des Ladestroms ist bei einem Einsatz von Halbleitern in der Schalteinrichtung nur eine geringe Halbleiterfläche erforderlich, wodurch ebenfalls Kosten und Bauraum des Gleichspannungswandlers eingespart werden können.

Nach einer Weiterbildung der Erfindung ist vorgesehen, dass zu den Schaltelementen Dioden parallel geschaltet sind. Der Einsatz der Dioden parallel zu den Schaltelementen führt dazu, dass die Schaltelemente ihre unterbrechende Wirkung nur in eine Stromflussrichtung entfalten können. Somit ist es möglich, über die Diode den Stromfluss in einer Richtung, beispielsweise von der Sekundärseite zur Primärseite an einer Stelle aufrechtzuerhalten, wohingegen die Gegenrichtung nur bei Bedarf durch Schließen des Schaltelements verwendet werden kann.

Nach einer Weiterbildung der Erfindung ist vorgesehen, dass mindestens zwei Schaltelemente unter Ausbildung eines Anschlusspunktes in Reihe geschaltet sind, wobei an den Anschlusspunkt eine der Drosseln an die Reihenschaltung einer der Sekundärkondensatoren angeschlossen ist. Die Verwendung mehrerer Schaltelemente an einem Anschlusspunkt führt dazu, dass unterschiedliche Stromlaufpfade innerhalb des Gleichspannungswandlers bestromt werden können. Werden zusätzlich zu den Schaltelementen ihnen parallel geschaltete Dioden eingesetzt, so ist es möglich, durch Schalten der Schaltelemente eine Stromlaufrichtung festzulegen. Ein Stromkreis schließt sich dann mittels eines Schalters über eine der Dioden sowie die Drossel.

Erfindungsgemäß ist vorgesehen, dass die Schalteinrichtung in einer zweiten Betriebsart den Primärkondensator über die mindestens eine Drossel mittels einer nacheinander erfolgenden Entladung der Sekundärkondensatoren auflädt, wobei der jeweilige Ladestrom etwa bei einem Nulldurchgang durch die Schalteinrichtung abgeschaltet wird. Die zweite Betriebsart führt dazu, dass der Ladestrom von der Sekundärseite zur Primärseite geführt wird. Dabei wird die an der Sekundärseite anliegende Gleichspannung zur Primärseite hin entsprechend verringert. Diese zweite Betriebsart ist insbesondere dann vorteilhaft, wenn der Gleichspannungswandler wahlweise als Hochsteller, also zur Erhöhung der an der Primärseite anliegenden Gleichspannung, oder als Tiefsteller, also zur Verringerung der an der Sekundärseite anliegenden Gleichpannung eingesetzt werden soll. Dies kann dann eingesetzt werden, wenn an der Primärseite die Hochspannungsbatterie und an der Sekundärseite die elektrische Maschine angeschlossen ist. In der ersten Betriebsart, in dem motorischen Betrieb, bestromt die Hochspannungsbatterie die elektrische Maschine, wodurch diese als elektrischer Antrieb fungiert. In der zweiten Betriebsart bestromt die elektrische Maschine die Hochspannungsbatterie, wodurch diese geladen wird, was als generatorischer Betrieb bezeichnet wird.

An der Sekundärseite des Gleichspannungswandlers wird das Potential mit der Schaltfrequenz der Schaltvorrichtung gegenüber dem Potential an der Primärseite verschoben. Daraus ergibt sich, dass eine Zwischenkreisspannungsversorgung an einem dem Sekundärkreis nachgeschaltetem Wechselrichter potentialfrei aufgebaut werden muss.

### Kurze Beschreibung der Zeichnungen

Die Zeichnungen veranschaulichen die Erfindung anhand eines Ausführungsbeispiels, und zwar zeigt:
- Figur 1: ein Schaltbild eines Gleichspannungswandlers,
- Figur 2: einen Ladestrom an einem ersten Sekundärkondensator in einer ersten Betriebsart und
- Figur 3: einen Ladestrom an einem zweiten Sekundärkondensator in einer ersten Betriebsart.

### Ausführungsform(en) der Erfindung

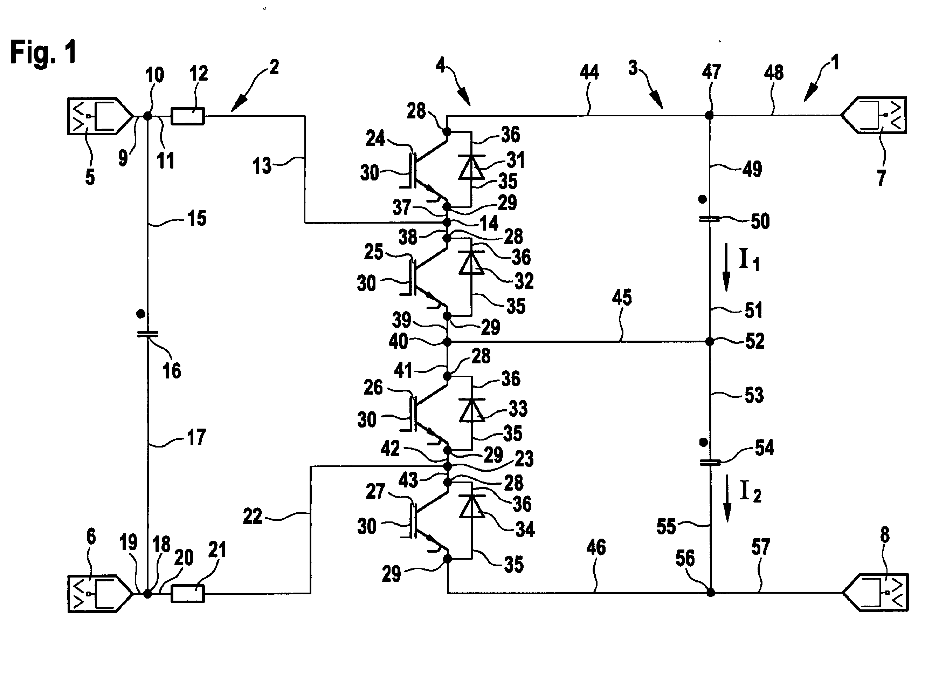

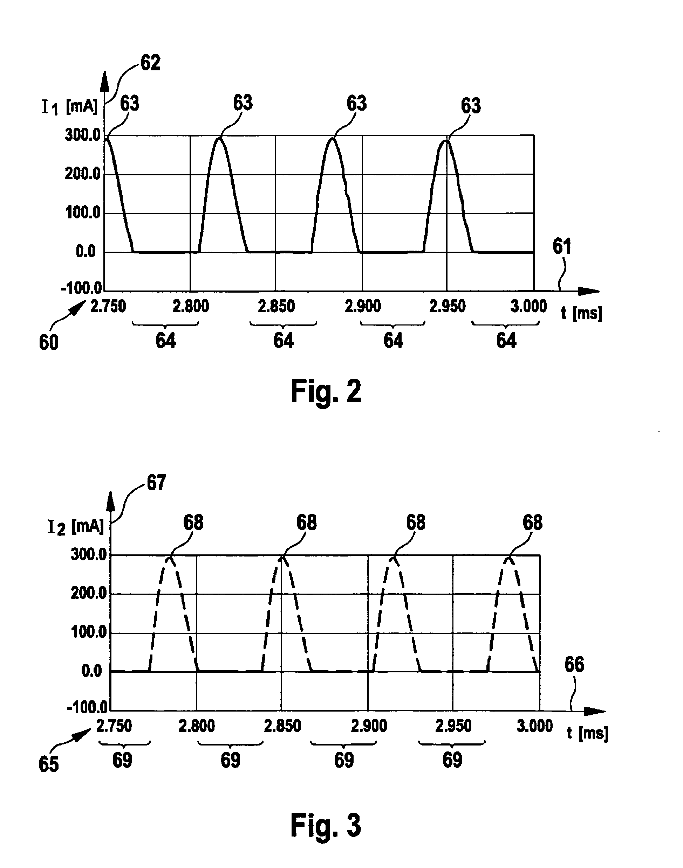

Die Figur 1 zeigt einen Gleichspannungswandler 1 als Schaltbild. Der Gleichspannungswandler 1 weist eine Primärseite 2 und eine Sekundärseite 3 auf, zwischen denen eine Schalteinrichtung 4 angeordnet ist. Der Gleichspannungswandler 1 besitzt zwei Eingangsanschlüsse 5 und 6, die eine nicht dargestellte Hochspannungsbatterie mit der Primärseite 2 verbinden, wodurch an ihnen eine Primärspannung anliegt. An der Sekundärseite 3 ist ein nicht dargestellter Wechselrichter, der einer elektrischen Maschine eines Hybridantriebs eines Kraftfahrzeugs vorgeschaltet ist, über zwei Ausgangsanschlüsse 7 und 8 angeschlossen, an denen eine Sekundärspannung anliegt. Ausgehend vom Eingangsanschluss 5 verläuft eine Leitung 9 zu einem Knotenpunkt 10. Vom Knotenpunkt 10 verläuft eine Leitung 11 zu einer Drossel 12, welche mittels einer Leitung 13 an einem Anschlusspunkt 14 angeschlossen ist. Ausgehend vom Knotenpunkt 10 verläuft eine weitere Leitung 15 zu einem Primärkondensator 16, der über eine zweite Leitung 17 mit einem Knotenpunkt 18 verbunden ist. Der Knotenpunkt 18 führt über die Leitung 19 zum Eingangsanschluss 6. Über eine dritte Leitung 20 ist der Knotenpunkt 18 mit einer Drossel 21 verbunden, welche mittels einer Leitung 22 an den Anschlusspunkt 23 angeschlossen ist. Die Anschlusspunkte 14 und 23 sind die Anschlusspunkte 14 und 23 der Primärseite 2 an die Schalteinrichtung 4. Die Schalteinrichtung 4 weist vier Schaltelemente 24, 25, 26 und 27 auf. Jeder der Schaltelemente 24, 25, 26 und 27 besitzt einen Eingangsknoten 28 und einen Ausgangsknoten 29. Die Schaltelemente 24, 25, 26 und 27 sind dabei als elektronische Leistungshalbleiter 30 ausgeführt. Jeder der Leistungshalbleiter 30 besitzt eine Durchflussrichtung, die von ihrem Eingangsknoten 28 zu ihrem Ausgangsknoten 29 führt. Den Schaltelementen 24, 25, 26 und 27 sind Dioden 31, 32, 33 und 34 zugeordnet. Dabei sind die Dioden 31, 32, 33 und 34 jeweils über eine Leitung 35 an den Ausgangsknoten 29 und über eine Leitung 36 an den Eingangsknoten 28 des ihnen zugeordneten Schaltelements 24, 25, 26 oder 27 angeschlossen. Die Dioden 31, 32, 33 und 34 besitzen eine Durchflussrichtung, die entgegengesetzt zur Durchflussrichtung des ihnen zugeordneten Leistungshalbleiters 30 liegt. Der Anschlusspunkt 14 ist über eine Leitung 37 mit dem Ausgangsknoten 29 des Schaltelements 24 verbunden. Weiter ist der Anschlusspunkt 14 über eine Leitung 38 mit dem Eingangsknoten 28 des Schaltelements 25 verbunden. An dem Ausgangsknoten 29 des Schaltelements 25 schließt sich eine Leitung 39 an, die zu einem Knotenpunkt 40 führt, von dem eine Leitung 41 zum Eingangsknoten 28 des Schaltelements 26 verläuft. Der Ausgangsknoten 29 des Schaltelements 26 ist über eine Leitung 42 mit dem Anschlusspunkt 23 verbunden, welcher sich durch eine Leitung 43 an dem Eingangsknoten 28 des Schaltelements 27 anschließt. Die Sekundärseite 3 wird mittels einer Leitung 44 an den Eingangsknoten 28 des Schaltelements 24, mittels einer Leitung 45 an den Knotenpunkt 40 und mittels einer Leitung 46 an den Ausgangsknoten 29 des Schaltelements 27 angeschlossen. Die Leitung 44 führt zu einem Knotenpunkt 47, welcher über eine Leitung 48 mit dem Ausgangsanschluss 7 verbunden ist. Von dem Knoten 47 führt eine weitere Leitung 49 zu einem ersten Sekundärkondensator 50, der mittels einer Leitung 51 an einen Knotenpunkt 52 angeschlossen ist. Der Knotenpunkt 52 ist ferner mit der Leitung 45 verbunden und weist eine weitere, dritte Leitung 53 auf, die zu einem zweiten Sekundärkondensator 54 führt. Eine Leitung 55 verbindet den Sekundärkondensator 54 mit einem Knotenpunkt 56, welcher mit der Leitung 46 und einer weiteren Leitung 57 verbunden ist. Die Leitung 57 verbindet den Knotenpunkt 56 mit dem Anschlusspunkt 8. Figur 2 zeigt ein kartesisches Koordinatensystem 60 mit einer Abszisse 61, der die Zeit t zugeordnet ist und einer Ordinate 62, der ein Ladestrom I₁ zugeordnet ist, welcher am Sekundärkondensator 50 anliegt. Innerhalb des kartesischen Koordinatensystems sind vier sinusförmige Halbwellenverläufe 63 angeordnet. Zwischen den Halbwellenverläufen 63 sind Zeitspannen 64 vorhanden, in denen der Ladestrom I₁ gleich Null ist.

Die Figur 3 zeigt ein kartesisches Koordinatensystem 65, das eine Abszisse 66 aufweist, der die Zeit t zugeordnet ist und eine Ordinate 67 aufweist, der ein Ladestrom I₂ zugeordnet ist, welcher am Sekundärkondensator 54 anliegt. Innerhalb des Koordinatensystems 65 sind sinusförmige Halbwellenverläufe 68 dargestellt. Zwischen den sinusförmigen Halbwellenverläufen 68 sind Zeitspannen 69 angeordnet, in denen der Ladestrom I₂ Null ist.

Die sinusförmigen Halbwellenverläufe 63 und 68 der Figuren 2 und 3 sind zueinander derart zeitlich versetzt, dass die Halbwellenverläufe 68 innerhalb der Zeitspannen 64 und die Halbwellenverläufe 63 innerhalb der Zeitspannen 69 liegen.

Der in Figur 1 dargestellte Gleichspannungswandler 1 erhöht die zwischen den Eingangsanschlüssen 5 und 6 angelegte Primärspannung mittels eines festen Faktors. Dieser Faktor ist vorzugsweise der Faktor 2, wobei auch andere Faktoren, wie beispielsweise die Faktoren 3, 4 und 5, denkbar sind. Dazu wären Änderungen in der Auslegung des Gleichspannungswandlers 1 erforderlich. An den Ausgangsanschlüssen 7 und 8 wird eine entsprechend erhöhte Sekundärspannung abgegeben. Die Erhöhung der Primärspannung zur Sekundärspannung stellt eine erste Betriebsart dar, die dazu verwendet wird, die Gleichspannung der Hochspannungsbatterie zu erhöhen und dann dem Wechselrichter der elektrischen Maschine zur Verfügung zu stellen, weshalb die erste Betriebsart als motorischer Betrieb bezeichnet wird. Zudem ist mit dem dargestellten Gleichspannungswandler 1 eine zweite Betriebsart möglich, bei der die Sekundärspannung zugeführt wird und zu der Primärspannung verringert wird. Diese wird dafür genutzt, die Hochspannungsbatterie mittels der elektrischen Maschine aufzuladen, weshalb diese zweite Betriebsart als generatorischer Betrieb bezeichnet wird.

Im motorischen Betrieb wird elektrische Leistung von der Hochspannungsbatterie zur elektrischen Maschine übertragen. Dabei wird elektrische Ladung vom Primärkondensator 16 auf die Sekundärkondensatoren 50 und 54 in zwei Schritten übertragen. Im ersten Schritt wird zunächst der erste Sekundärkondensator 50 aufgeladen. In diesem Fall ist das Schaltelement 26 geschlossen und die Schaltelemente 24, 25 und 27 sind geöffnet. Der Sekundärkondensator 50 wird dann vom Primärkondensator 16 über die Diode 31, dem Schaltelement 26 und die Drosseln 12 und 21 geladen. Die Induktivitäten der Drosseln 12 und 21 sind derart resonant auf das gesamte elektrische System abgestimmt, dass der Ladestrom I₁ an dem ersten Sekundärkondensator 50 den positiven sinusförmigen Halbwellenverlauf 63 aufweist. Erreicht der Ladestrom I₁ den Wert Null, wird das Schaltelement 26 geöffnet, wobei kein oder kaum ein Stromsprung auftritt. Im zweiten Schritt erfolgt das Laden des Sekundärkondensators 54. Zu diesem Zweck wird das Schaltelement 25 geschlossen und die Schaltelemente 24, 26 und 27 bleiben geöffnet. Der Sekundärkondensator 54 wird dann vom Primärkondensator 16 über das Schaltelement 25, die Diode 34 und die Drosseln 12 und 21 geladen. Aufgrund der resonanten Ausgestaltung der Induktivitäten der Drosseln 12 und 21 ergibt sich für den Ladestrom I₂ der positive sinusförmige Halbwellenverlauf 68. Erreicht der Ladestrom I₂ den Wert Null, dann wird das Schaltelement 25 geöffnet, ohne dass ein Stromsprung dabei entsteht. Auf diese Weise kann der motorische Betrieb dauerhaft durch ein zyklisches, abwechselndes Schalten der Schaltelemente 26 und 25 erzeugt werden.

Im generatorischen Betrieb wird Leistung von der elektrischen Maschine zur Hochspannungsbatterie übertragen. Dabei wird von den Sekundärkondensatoren 50 und 54 elektrische Ladung auf den Primärkondensator 16 in zwei Schritten übertragen. Im ersten Schritt erfolgt eine Ladungsübertragung vom ersten Sekundärkondensator 50 auf den Primärkondensator 16. Zu diesem Zweck wird zunächst das Schaltelement 24 geschlossen und die Schaltelemente 25, 26 und 27 im geöffneten Zustand beibehalten. Der Primärkondensator 16 wird dann vom Sekundärkondensator 50 über die Diode 33, dem Schaltelement 24 und die Drosseln 12 und 21 geladen. Aufgrund der resonanten Ausgestaltung der Induktivitäten der Drosseln 12 und 21 ergibt sich bei diesem Beladen des Primärkondensators 16 der Ladestrom I₁ mit nicht gezeigten negativen sinusförmigen Halbwellenverläufen. Erreicht der Ladestrom I₁ den Wert Null, wird das Schaltelement 24 geöffnet, ohne einen Stromsprung zu erzeugen. Im zweiten Schritt wird elektrische Ladung vom zweiten Sekundärkondensator 54 auf den Primärkondensator 16 übertragen. Dazu wird zunächst das Schaltelement 27 geschlossen und die Schaltelemente 24, 25 und 26 geöffnet beibehalten. Der Primärkondensator 16 wird dann vom Sekundärkondensator 54 über das Schaltelement 27, die Diode 32 und die Drosseln 12 und 21 geladen. Aufgrund der resonanten Ausgestaltung der Induktivitäten der Drosseln 12 und 21 ergibt sich, dass der Ladestrom I₂ nicht gezeigte negative sinusförmige Halbwellenverläufe aufweist. Erreicht der Ladestrom I₂ den Wert Null, wird das Schaltelement 27 auf die bereits dargestellte, vorteilhafte Weise geöffnet. Somit ergibt sich, dass die Ladeströme I₁ und I₂ aus dem generatorischen Betrieb den Verlauf der Ladeströme I₁ und I₂ aus dem motorischen Betrieb mit einem negativen Vorzeichen annehmen.

Bei dem vorgeschlagenen Gleichspannungswandler (1) sind insbesondere Spannungssprünge zwischen einem Potential der Hochspannungsbatterie und einem Potential eines nachgeschalteten Inverterzwischenkreises, welcher der elektrischen Maschine vorgeschaltet ist, kritisch. Dies ergibt sich, da sich insbesondere ein Unterschied der Potentiale beim Einschalten eines Leistungshalbleiters 30 sprunghaft ändert. Diese sprunghafte Änderung des Potentialunterschieds führt zu hochfrequenten Harmonischen im Spannungsverlauf des Gleichspannungswandlers 1. Diese hochfrequenten Harmonischen können zu kritischen Ausgleichsströmen über eine kapazitive gekoppelte Masse führen. Um dem entgegenzuwirken, können diese Ausgleichsströme durch geeignete Massekonzepte im Bereich der Hybridantriebsvorrichtung vorteilhaft ausgestaltet werden. Ferner ist es denkbar, Zeitspannen in denen sämtliche Schaltelemente 24, 25, 26 und 27 geöffnet sind für ein Vorumladen der Spannungspotentiale zu nutzen.

Der durch die Verschiebung der Potentiale zusätzlich entstehende elektromagnetische Belastung steht eine topologiebedingte Filterung und damit Verringerung der durch einen Inverterbetrieb hervorgerufenen Hochfrequenzstörung auf Traktionsnetzseite gegenüber.

## Patentansprüche

1. Gleichspannungswandler (1) mit einer Primärseite (2) und einer mit der Primärseite (2) galvanisch gekoppelten Sekundärseite (3), wobei die Primärseite (2) mindestens eine Drossel (12,21) und die Sekundärseite (3) mindestens zwei in Reihe geschaltete Sekundärkondensatoren (50,54) aufweist, wobei zwischen Primärseite (2) und Sekundärseite (3) eine steuerbare oder regelbare, elektronische Schalteinrichtung (4) angeordnet ist, die schaltabhängig in einer ersten Betriebsart die Sekundärkondensatoren (50,54) nacheinander über die Drossel (12,21) auflädt und den jeweiligen Ladevorgang etwa beim Nulldurchgang des jeweiligen Ladestroms (I₁,I₂) beendet, **dadurch gekennzeichnet, dass** die Primärseite (2) zwei Eingangsanschlüsse (5,6) aufweist, an die ein Primärkondensator (16) angeschlossen ist, und dass die Schalteinrichtung (4) in einer zweiten Betriebsart den Primärkondensator (16) über die mindestens eine Drossel (12,21) mittels einer nacheinander erfolgenden Entladung der Sekundärkondensatoren (50,54) auflädt, wobei der jeweilige Ladestrom (I₁,I₂) etwa bei seinem Nulldurchgang durch die Schalteinrichtung (4) abgeschaltet wird.

2. Gleichspannungswandler (1) nach Anspruch 1, **dadurch gekennzeichnet, dass** die Drossel (12,21) und eine Schaltfrequenz der Schalteinrichtung (4) derart bemessen sind, dass der jeweilige Ladestrom (I₁,I₂) einen etwa sinusförmigen Halbwellenverlauf (63,68) aufweist.

3. Gleichspannungswandler (1) nach einem der vorhergehenden Ansprüche, **gekennzeichnet durch** zwei Drosseln (12,21), wobei die eine Drossel (12,21) an den einen Eingangsanschluss (56) und an die Schalteinrichtung (4) und die andere Drossel (21,12) an den anderen Eingangsanschluss (6,5) und an die Schalteinrichtung (4) angeschlossen ist.

4. Gleichspannungswandler (1) nach einem der vorhergehenden Ansprüche, **dadurch gekennzeichnet, dass** die Schalteinrichtung (4) als Schaltelemente (24,25,26,27) elektronische Leistungshalbleiter (30) aufweist.

5. Gleichspannungswandler (1) nach einem der vorhergehenden Ansprüche, **dadurch gekennzeichnet, dass** zu den Schaltelementen (24,25,26,27) Dioden (31,32,33,34) parallel geschaltet sind.

6. Gleichspannungswandler (1) nach einem der vorhergehenden Ansprüche, **dadurch gekennzeichnet, dass** mindestens zwei Schaltelemente (24,25,26,27) unter Ausbildung eines Anschlusspunktes (14,23) in Reihe geschaltet sind, wobei an den Anschlusspunkt (14,23) eine der Drosseln (12,21) und an die Reihenschaltung einer der Sekundärkondensatoren (50,54) angeschlossen ist.

## Claims

1. DC-to-DC converter (1) comprising a primary side (2) and a secondary side (3), which is coupled galvanically to the primary side (2), wherein the primary side (2) has at least one inductor (12, 21) and the secondary side (3) has at least two secondary capacitors (50, 54) connected in series, wherein a controllable or regulatable electronic switching device (4) is arranged between the primary side (2) and the secondary side (3), said switching device charging, in switching-dependent fashion in a first operating mode, the secondary capacitors (50, 54) successively via the inductor (12, 21) and ending the respective charging operation for example at the zero crossing of the respective charge current (I₁, I₂), **characterized in that** the primary side (2) has two input connections (5, 6), to which a primary capacitor (16) is connected, and **in that** the switching device (4), in a second operating mode, charges the primary capacitor (16) via the at least one inductor (12, 21) by means of successive discharge of the secondary capacitors (50, 54), wherein the respective charge current (I₁, I₂) is disconnected for example at its zero crossing by the switching device (4).

2. DC-to-DC converter (1) according to Claim 1, **characterized in that** the inductor (12, 21) and a switching frequency of the switching device (4) are dimensioned such that the respective charge current (I₁, I₂) has an approximately sinusoidal half-cycle profile (63, 68).

3. DC-to-DC converter (1) according to one of the preceding claims, **characterized by** two inductors (12, 21), wherein one inductor (12, 21) is connected to one input connection (5, 6) and to the switching device (4), and the other inductor (21, 12) is connected to the other input connection (6, 5) and to the switching device (4).

4. DC-to-DC converter (1) according to one of the preceding claims, **characterized in that** the switching device (4) has electronic power semiconductors (30) as switching elements (24, 25, 26, 27).

5. DC-to-DC converter (1) as claimed in one of the preceding claims, **characterized in that** diodes (31, 32, 33, 34) are connected in parallel with the switching elements (24, 25, 26, 27).

6. DC-to-DC converter (1) according to one of the preceding claims, **characterized in that** at least two switching elements (24, 25, 26, 27) are connected in series so as to form a connection point (14, 23), wherein one of the inductors (12, 21) is connected to the connection point (14, 23) and one of the secondary capacitors (50, 54) is connected to the series circuit.

## Revendications

1. Convertisseur de tension continue (1) comprenant un côté primaire (2) et un côté secondaire (3) couplé galvaniquement au côté primaire (2), le côté primaire (2) possédant au moins une bobine d'arrêt (12, 21) et le côté secondaire (3) au moins deux condensateurs secondaires (50, 54) branchés en série, un dispositif de commutation (4) électronique commandable ou régulable étant disposé entre le côté primaire (2) et le côté secondaire (3) qui, suivant la commutation, dans un premier mode de fonctionnement, charge les condensateurs secondaires (50, 54) l'un après l'autre par le biais de la bobine d'arrêt (12, 21) et met fin au processus de charge respectif approximativement lors du passage par zéro du courant de charge (I₁, I₂) respectif, **caractérisé en ce que** le côté primaire (2) possède deux bornes d'entrée (5, 6) auxquelles est raccordé un condensateur primaire (16), et **en ce que** le dispositif de commutation (4), dans un deuxième mode de fonctionnement, charge le condensateur primaire (16) par le biais de l'au moins une bobine d'arrêt (12, 21) au moyen d'une décharge successive des condensateurs secondaires (50, 54), le courant de charge (I₁, I₂) respectif étant déconnecté par le dispositif de commutation (4) approximativement lors de son passage par zéro.

2. Convertisseur de tension continue (1) selon la revendication 1, **caractérisé en ce que** la bobine d'arrêt (12, 21) et une fréquence de commutation du dispositif de commutation (4) sont dimensionnées de telle sorte que le courant de charge (I₁, I₂) respectif présente un tracé de demi-onde (63, 68) approximativement sinusoïdal.

3. Convertisseur de tension continue (1) selon l'une des revendications précédentes, **caractérisé par** deux bobines d'arrêt (12, 21), l'une des bobines d'arrêt (12, 21) étant raccordée à l'une des bornes d'entrée (5, 6) et au dispositif de commutation (4) et l'autre bobine d'arrêt (21, 12) à l'autre borne d'entrée (6, 5) et au dispositif de commutation (4).

4. Convertisseur de tension continue (1) selon l'une des revendications précédentes, **caractérisé en ce que** le dispositif de commutation (4) possède comme éléments de commutation (24, 25, 26, 27) des semiconducteurs de puissance électroniques (30).

5. Convertisseur de tension continue (1) selon l'une des revendications précédentes, **caractérisé en ce que** des diodes (31, 32, 33, 34) sont branchées en parallèle avec les éléments de commutation (24, 25, 26, 27).

6. Convertisseur de tension continue (1) selon l'une des revendications précédentes, **caractérisé en ce qu'**au moins deux éléments de commutation (24, 25, 26, 27) sont branchés en série en formant un point de raccordement (14, 23), l'une des bobines d'arrêt (12, 21) étant raccordée au point de raccordement (14, 23) et l'un des condensateurs secondaires (50, 54) au circuit série.
